# DEMANDE DE BREVET EUROPEEN

(11) **EP 1 596 168 A1**
(43) Date de publication de la demande: **16.11.2005**
(21) Numéro de dépôt: 05300281.2
(22) Date de dépôt: 14.04.2005
(51) Int. Cl.: G01F 15/14, B29C 45/00

(54) **Capot de compteur de fluide**

(30) Priorité: 14.05.2004 FR 0405311
(71) Demandeur: Actaris S.A.S., 92643 Boulogne-Billancourt (FR)
(72) Inventeur: Talvat, Jean-Marie, 91620, NOZAY (FR)
(74) Mandataire: Lenne, Laurence

(57) **Abrégé**

L'invention concerne un capot d'une pièce de compteur de fluide en matière plastique transparente comportant une paroi destinée au passage de signaux optiques, dite paroi active. Selon l'invention, cette paroi active est entourée partiellement d'une bande dite de déviation et d'épaisseur inférieure à l'épaisseur du capot et formant un seuil d'injection latéral unique de cette paroi active.

## Description

L'invention concerne un capot de compteur de fluide, en particulier d'un capot de totalisateur de compteur de fluide, par exemple d'eau, destiné à permettre le relevé à distance de la consommation de ce compteur d'eau ou des opérations équivalentes de type journalisation ou alarme.

Il peut être utilisé un dispositif de détection optique pour compteur comportant un indicateur de consommation visible formé d'un disque indicateur rotatif pourvu d'un secteur dit actif et des éléments optiques du type émetteur et du type récepteur en vis à vis du disque, dont le signal optique reçu est traité pour déduire le nombre de tours du disque.

Ce dispositif comprend un détecteur optique qui est disposé à l'extérieur du compteur et qui est adapté pour produire un signal utile à chaque fois qu'un index ou secteur actif agencé sur un disque passe devant le détecteur. Ce signal est amplifié et converti de façon à être envoyé sur un réseau de transmission de données. Un tel dispositif de détection permet entre autre la détermination du nombre de tours du disque.

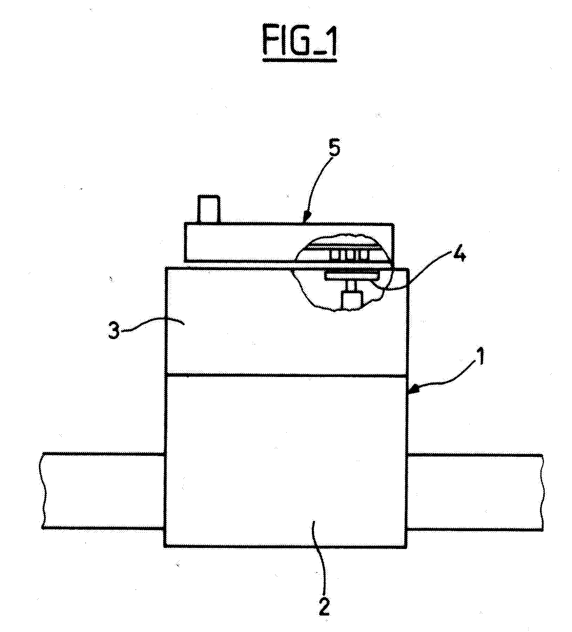

La figure 1 représente un tel compteur.

Cette figure 1 est une vue de face d'un compteur 1 de fluide, plus précisément d'eau, comportant un corps dit bâche 2 pourvue d'une canalisation d'arrivée et une canalisation de sortie de l'eau et surmontée d'un totaliseur 3 contenant un mécanisme de transmission et de réduction de la rotation de l'arbre d'un élément mesurant tel qu'une turbine ou une chambre volumétrique, contenu dans la bâche 2 vers un dispositif d'affichage de la consommation non représenté et un disque indicateur 4 rotatif parallèle à une paroi supérieure transparente du totaliseur. Un module de détection optique 5 à paroi inférieure au moins partiellement transparente est posé sur la paroi supérieure du compteur 1 afin de détecter la consommation d'eau ainsi que son sens de circulation.

Pour une bonne transmission des signaux optiques au travers de la paroi transparente du module et celle du totalisateur qui se trouve en vis à vis, il est très important que ces parois soient de qualité optimale.

Or, actuellement, le moulage par injection de matière plastique pour réaliser le capot du totalisateur ainsi que celui du module ne permet pas d'obtenir une paroi transparente correcte compte tenu des formes et des épaisseurs de ces capots. Il en résulte des défauts dus à des fronts de matière plastique de température différente venant en contact au moment du moulage. Ces défauts sont susceptibles de dévier ou même occulter les faisceaux optiques en général à impulsions et de perturber la télé-mesure.

L'invention résout ce problème et propose un capot d'une pièce de compteur de fluide en matière plastique transparente comportant une paroi destinée au passage de signaux optiques, dite paroi active, caractérisé en ce que cette paroi active est entourée partiellement d'une bande, dite de déviation, d'épaisseur inférieure à l'épaisseur du capot et formant un seuil d'injection latéral unique de cette paroi active.

Selon un mode de réalisation préféré, ladite paroi active est d'épaisseur inférieure à l'épaisseur de paroi du capot.

Avantageusement, l'épaisseur de ladite paroi active et l'épaisseur de ladite bande de déviation sont sensiblement égales.

De préférence, ladite bande de déviation est distante de ladite paroi active.

Avantageusement, ladite paroi active est de surface supérieure à la surface traversée par lesdits signaux.

Avantageusement, la matière plastique est injectée en un point du capot le plus distant de ladite paroi active.

L'invention concerne un capot de totalisateur de compteur de fluide et un capot de module de télé-relevé de compteur de fluide tels que précisés ci-dessus.

L'invention est décrite ci-après plus en détail à l'aide de figures ne représentant qu'un mode de réalisation préféré de l'invention.

La figure 1 est une vue de côté d'un compteur de fluide, en particulier d'eau, et a déjà été précisée plus haut.

Les figures 2 et 3 sont des vues en perspective d'un capot de totalisateur de compteur de fluide, en particulier d'eau, conforme à l'invention.

Le capot 10 est destiné à enfermer les pièces mécaniques et/ou électroniques d'un totalisateur de compteur de fluide, en particulier d'un compteur d'eau,

Ce capot est en matière plastique transparente, par exemple en polycarbonate, moulée par injection. Sur sa face supérieure, ce capot comporte une paroi 11 de forme générale circulaire destinée au passage de signaux optiques, dite paroi active. Sous cette paroi active 11 est positionné un disque indicateur rotatif parallèle tel que le disque 4 représenté sur la figure 4. Le capot 10 présente ici une cavité 12 dans laquelle peut être posé un module de télé-relevé tel que le module 5 représenté sur la figure 1, ce module recouvrant alors également la paroi active 11. Un dispositif de détection optique est contenu dans le module et vient se positionner en vis à vis de la paroi active 11.

Lors du moulage de ce capot 10, la matière plastique est injectée en un point P du capot le plus distant de la paroi active 11. Dans l'exemple représenté, le capot 10 ayant une forme générale cylindrique, ce point P est sur la paroi latérale du capot et opposé sensiblement diamétralement au centre de la paroi active 11.

La paroi active 11 est entourée partiellement d'une bande 13 dite de déviation et d'épaisseur inférieure à l'épaisseur du capot 10 et formant un seuil d'injection 14 latéral unique de cette paroi active.

Afin de minimiser les interférences provoquées par la paroi active 11 dans la transmission des signaux optiques au travers de cette dernière, la paroi active est d'épaisseur inférieure à l'épaisseur de paroi du capot 10. A titre d'exemple, l'épaisseur de paroi du capot 10 est d'environ 1, 5 mm et l'épaisseur de la surface active 11 est d'environ 0,8 mm.

L'épaisseur de la paroi active 11 et l'épaisseur de la bande de déviation 13 sont sensiblement égales. La paroi active est de surface supérieure à la surface traversée par lesdits signaux.

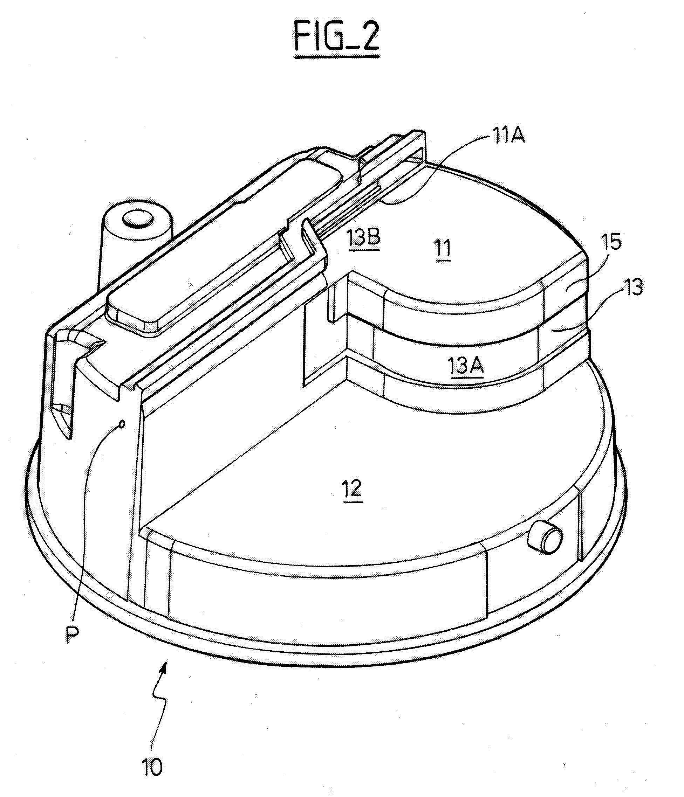

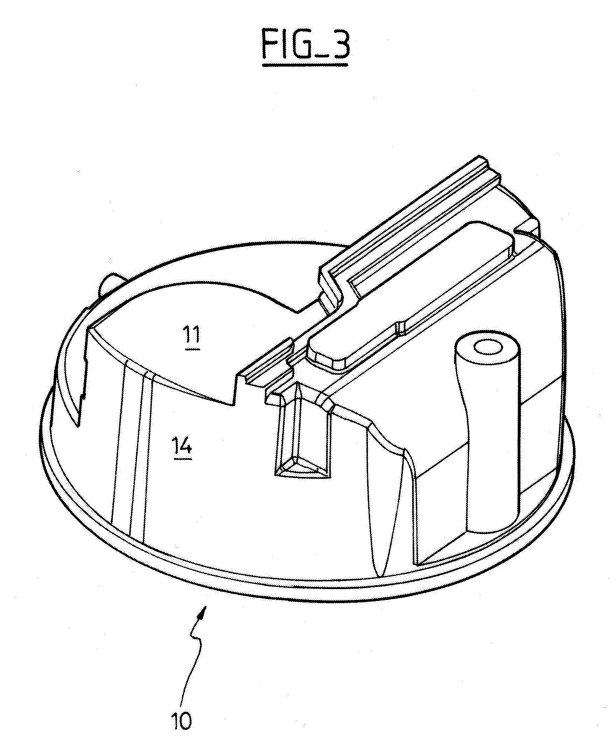

La bande de déviation peut être distante de la paroi active 11 et est séparée de cette dernière par une autre bande 15 de matière plastique d'épaisseur sensiblement égale à l'épaisseur de paroi du capot 10. C'est selon le mode de réalisation représenté sur les figures 2 et 3 le cas d'un tronçon de bande 13A. Par contre, un autre tronçon de cette bande 13B est joint à la surface active 11 et crée une prolongation de cette dernière.

Grâce à cet agencement conforme à l'invention, la paroi active est exempte de tout défaut, généralement provoqué par un choc thermique sur une ligne de recollement entre deux fronts de matière plus froide qui s'est solidifiée en surface.

En effet, lors de l'injection de cette matière plastique par le point P, la matière se répand dans les parties d'épaisseur supérieure, soit tout d'abord jusqu'à la bande de déviation 13 qui sert alors d'obstacle au passage de la matière qui s'écoule en conséquence le long du bord de cette bande 13 jusqu'au seuil d'injection 14. Ce seuil d'injection 14 est, dans ce mode de réalisation particulier, une partie de paroi latérale du capot 10.

Dans le cas de la présence d'une autre bande 15 d'épaisseur supérieure, comme représenté, la matière se répand dans cette autre bande et finalement forme la paroi active 11, la coulée se terminant à proximité du bord 11A de cette paroi active, dans le tronçon 13B de bande adjacent. Cette paroi active 11 étant de surface supérieure à la surface traversée par les signaux, ce défaut près du bord 11A est hors de ce passage de signaux et n'est absolument pas perturbant.

Dans le cas d'absence d'une autre bande 15 d'épaisseur supérieure, la paroi active se forme dès l'arrivée de la matière sur le bord supérieur du seuil d'injection et la coulée se termine dans la bande de déviation 13 où aucune transmission de signaux optiques n'est effectuée.

Cet agencement assurant l'obtention d'une paroi transparente exempte de défaut peut bien sûr être utilisé pour d'autres applications qu'un capot de totalisateur. En particulier dans le cadre d'un compteur de fluide, il peut être utilisé pour obtenir une telle paroi transparente sur un module 5 de télé-relevé associé.

## Revendications

1. Capot (10) d'une pièce de compteur de fluide en matière plastique transparente comportant une paroi (11) destinée au passage de signaux optiques, dite paroi active, **caractérisé en ce que** cette paroi active (11) est entourée partiellement d'une bande (13) dite de déviation et d'épaisseur inférieure à l'épaisseur du capot et formant un seuil d'injection latéral unique (14) de cette paroi active.

2. Capot selon la revendication 1, **caractérisé en ce que** ladite paroi active (11) est d'épaisseur inférieure à l'épaisseur de paroi du capot.

3. Capot selon la revendication 1 ou 2, **caractérisé en ce que** l'épaisseur de ladite paroi active (11) et l'épaisseur de ladite bande de déviation (13) sont sensiblement égales.

4. Capot selon l'une des revendications précédentes, **caractérisé en ce que** ladite bande de déviation (13A) est distante de ladite paroi active (11).

5. Capot selon l'une des revendications précédentes, **caractérisé en ce que** ladite paroi active (11) est de surface supérieure à la surface traversée par lesdits signaux.

6. Capot selon l'une des revendications précédentes, **caractérisé en ce que** la matière plastique est injectée en un point (P) du capot le plus distant de ladite paroi active.

7. Capot de totalisateur (3) de compteur de fluide selon l'une des revendications précédentes.

8. Capot de module de télé-relevé (5) de compteur de fluide selon l'une des revendications 1 à 6.
